Europäisches Patentamt

(19) European Patent Office

Office européen des brevets

(11) Veröffentlichungsnummer : **0 031 942**
**B1**

(12) **EUROPÄISCHE PATENTSCHRIFT**

(45) Veröffentlichungstag der Patentschrift :
04.07.84

(51) Int. Cl.³ : **F 24 J   3/02**, F 24 D  11/02,
      F 24 J   3/00

(21) Anmeldenummer : 80108108.4

(22) Anmeldetag : 22.12.80

(54) **Verfahren zum Betrieb einer Heizvorrichtung zur Ausnutzung von Erdwärme mittels einer Wärmepumpe sowie Vorrichtung zur Durchführung dieses Verfahrens.**

(30) Priorität : 28.12.79 DE 2952541

(43) Veröffentlichungstag der Anmeldung :
15.07.81 Patentblatt 81/28

(45) Bekanntmachung des Hinweises auf die Patenterteilung : 04.07.84 Patentblatt 84/27

(84) Benannte Vertragsstaaten :
AT BE CH FR GB IT LI NL

(56) Entgegenhaltungen :
EP-A- 0 004 552
DE-A- 2 608 873
DE-A- 2 738 254
DE-A- 2 800 512
DE-A- 2 803 458
DE-A- 2 829 456
DE-U- 7 911 926
US-A- 2 428 876
US-A- 2 513 373

(73) Patentinhaber : CHEMOWERK GmbH Fabrik für
Behälter und Transportgeräte
In den Backenländern
D-7056 Weinstadt 5 (DE)

(72) Erfinder : Böbel, Alfred
An der Meisengasse 2
D-7955 Ochsenhausen 1 (DE)

(74) Vertreter : Rotermund, Hanns-Jörg, Dipl.-Phys. et al
MANITZ, FINSTERWALD & ROTERMUND Seelbergstrasse 23/25
D-7000 Stuttgart 50 (DE)

**Beschreibung**

Die Erfindung betrifft ein Verfahren zum Betrieb einer Heizvorrichtung zur Ausnutzung von Erdwärme mittels einer Wärmepumpe mit einem im Erdreich angeordneten und mit diesem in Wärmeaustausch stehenden Wärmespeicher mit Wasserfüllung, der mittels der Wärmepumpe Wärme unter gleichzeitigem Entzug von Wärme aus dem umgebenden Erdreich über einen zwischen dem Wärmespeicher und der Wärmepumpe angeordneten, ein Wärmeträgermedium führenden Leitungskreis entnehmbar ist. Außerdem bezieht sich die Erfindung auf entsprechende Vorrichtungen.

Ein derartiges Verfahren sowie eine zu dessen Durchführung geeignete Vorrichtung sind aus der US-A-24 28 876 bekannt. Als Wärmespeicher ist danach ein Bassin od. dgl. mit Betonwandungen und Flüssigkeitsfüllung im Erdreich angeordnet. Zur Verbesserung des Wärmeflusses vom Erdreich ins Bassin dienen Wärmeleitstäbe aus Metall, welche mit der Wandung des Bassins verbunden sind und sich in das umgebende Erdreich hinein erstrecken. Innerhalb des Bassins sind wärmeleitende Stützstäbe horizontal und vertikal angeordnet, die einerseits einen im Leitungskreis des Wärmeträgermediums angeordneten Wärmetauscher tragen und andererseits die Wärme in der Flüssigkeitsfüllung relativ gleichmäßig verteilen, so daß der für Flüssigkeiten typischen Bildung einer stabilen Schichtung mit in Aufwärtsrichtung innerhalb des Bassins ansteigender Temperatur entgegengewirkt wird.

Durch Wärmeentzug aus der Flüssigkeitsfüllung des Bassins können einerseits der Wärmeinhalt des umgebenden Erdreiches und andererseits der Wärmeinhalt der Flüssigkeitsfüllung sowie deren Latentwärme ausgenutzt werden. Bei der Wärmeentnahme können der Wärmetauscher sowie die wärmeleitenden Stützstäbe zunächst vereisen ; nachfolgend sucht die Wärme, welche von der nicht vereisten Flüssigkeit im Bassin sowie über die Wärmeleitstäbe zugeführt wird, das Eis zu tauen.

Gegebenenfalls kann bei der Wärmeentnahme auch das Erdreich gefrieren, während die Flüssigkeitsfüllung — wenn eine Flüssigkeit mit Gefrierpunkt unterhalb der Eistemperatur von Wasser bzw. mit Gefrierschutzmittel versetztes Wasser verwendet werden — in Flüssigkeitsphase bleibt.

Bei dieser bekannten Anordnung, bei der die Flüssigfüllung des Bassins — zumindest teilweise — immer in Flüssigphase verbleibt, kann ein ausreichender Wärmefluß vom umgebenden Erdreich in die Flüssigkeitsfüllung nur mit hohem Aufwand, d. h. mit der Anordnung von Wärmeleitstäben auf der Außenseite des Bassins, erzielt werden.

Aus der DE-A-27 38 254 ist eine Heizvorrichtung zur Ausnutzung von Erdwärme mittels einer Wärmepumpe bekannt. Hier ist als Wärmespeicher eine Grube mit einer Erdfüllung vorgesehen, welche spezielle, mit Wasser getränkte Beigaben enthält und mittels einer wärmedurchlässigen, aus einem Polymer bestehenden Folie od. dgl. vom die Grube umgebenden Erdreich getrennt ist. Innerhalb der Grube ist ein Rohrregister angeordnet, welches einen Teil des zwischen der Wärmepumpe und dem Wärmespeicher bzw. der Grube angeordneten Leitungskreises bildet und wie dieser Leitungskreis Wasser mit Frostschutzmittel führt. Bei dieser Anordnung läßt sich mittels der Wärmepumpe der aufgrund der wasserhaltigen Beigaben erhebliche Wärmeinhalt der Erdfüllung in der Grube sowie gegebenenfalls auch der Wärmeinhalt des angrenzenden Erdreiches nutzen.

Abgesehen davon, daß die Grube bei dieser Anordnung ein präpariertes Erdmaterial aufnimmt und gegenüber dem umgebenden Erdreich durch die Folie od. dgl. abgetrennt ist, entspricht diese Anordnung einem herkömmlichen, sogenannten Erdkollektor, welcher zur Ausnutzung von Erdwärme direkt im Erdreich eingebettet und mit einer Wärmepumpe verbunden ist. Derartige Anordnungen müssen jedoch für größere Wärmeleistungen verhältnismäßig aufwendig angelegt sein.

In der DE-A-28 03 458 wird eine Anordnung beschrieben, bei der ein mit einem Sonnenkollektor gekoppelter, im Boden versenkter Wärmespeicher, welcher mit dem umgebenden Erdreich in Wärmeaustausch steht, einen Wärmeverbraucher gegebenenfalls direkt mit Wärmeenergie beliefert. In der Umgebung des Wärmespeichers ist im Erdreich ein Erdkollektor angeordnet, welcher an eine Wärmepumpe angeschlossen ist, die gegebenenfalls den vorgenannten Wärmeverbraucher mit Heizwärme beliefert, wenn das Temperaturniveau des Wärmespeichers zur direkten Wärmebelieferung des Verbrauchers nicht ausreicht. Mittels des Erdkollektors und der Wärmepumpe lassen sich also der Wärmeinhalt des Erdreiches sowie die vom Wärmespeicher an das Erdreich abgeführten Wärmemengen auch bei niedrigem Temperaturniveau nutzen. Im übrigen ist der Erdkollektor möglichst so angeordnet, daß er zumindest teilweise in den Bereich des in der Regel fließenden Grundwassers eindringt, um dessen Wärmeinhalt ausnutzen zu können.

Auch hier ist wiederum ein recht hoher Aufwand erforderlich, da der Erdkollektor für hohe Wärmeleistungen entsprechend umfangreich bzw. vergleichsweise tief aud Grundwasserniveau installiert werden muß.

Die DE-A-26 08 873 schließlich zeigt eine Anordnung mit zwei Wärmepumpenkreisläufen. Der erste Wärmepumpenkreislauf ist zwischen einem Außenluftwärmeaustauscher und einer Raumheizung angeordnet, so daß der letzteren der Wärmeinhalt der Außenluft auf erhöhtem Temperaturniveau zugeführt werden kann. Dabei anfallende überschüssige Wärme kann einem Wärmespeicher zugeführt werden, welcher über den zweiten Wärmepumpenkreislauf ebenfalls mit der mit der Raumheizung verbunden ist, so daß dieselbe auch unter Ausnutzung der Speicherwärme mit Wärme versorgt werden kann, wenn der erste Wärmepumpenkreislauf aufgrund niedriger Außentemperaturen keine oder nur noch geringe Wärmemengen liefern kann. Als Wärmespeicher kann gegebenenfalls das Erdreich dienen. Außerdem ist die Anordnung eines sogenannten Latentspeichers möglich, um auch die Umwandlungswärme beim Phasenübergang von Wasser zu Eis nutzen zu können.

Auch diese Anordnung ist, insbesondere aufgrund doppelt angeordneter Wärmepumpenkreisläufe, aufwendig.

Aufgabe der Erfindung ist es, ein zur Ausnutzung von Erdwärme geeignetes Verfahren zu schaffen, welches den Wärmeinhalt eines sehr großen Erdbereiches wirtschaftlich auszunutzen gestattet und nur einen sehr geringen Installationsaufwand erfordert.

Diese Aufgabe wird dadurch gelöst, daß die Wasserfüllung eines als Wärmespeicher unterhalb der Bodenfrostgrenze im Erdreich versenkten, vorgefertigten, geschlossenen Behälters, zumindest teilweise aus Metall oder Kunststoff, während einer Heizperiode durch die Wärmepumpe vollständig vereist wird, und daß der Zustand vollständiger Vereisung mittels eingeschalteter Wärmepumpe unter weiterem Entzug von Wärme aus dem Erdreich aufrechterhalten wird, so daß der Wärmeinhalt eines gegenüber dem Behälter großen, an dem Behälter angrenzenden Bodenbereiches ausgenutzt wird.

Die Erfindung nutzt einerseits das im Vergleich zu Wasser gute Wärmeleitvermögen von Eis sowie andererseits die Erkenntnis aus, daß durch die vollständige Vereisung der Wasserfüllung eine innige Verbindung zwischen dem im Behälter gebildeten Eisblock und somit ein ausgezeichneter Wärmeübergang an der Grenzfläche zwischen der vereisten Behälterfüllung und der Behälterwand erreicht werden, wohingegen bei flüssiger Phase des Speichermediums unerwünschte Wärmeübergangswiderstände auftreten würden.

Indem gemäß der Erfindung die Entnahme der Erdwärme unter Zwischenschaltung eines mit dem Wärmeträgermedium in Verbindung stehenden « Eisblockes » erfolgt, wird ein außergewöhnlich einfaches sowie überraschend effizientes Verfahren mit stark verbessertem Wärmeübergang vom Erdreich zum Behälterinhalt erreicht. Dabei ist vorteilhaft, daß — zwangsläufig — erhebliche Mengen an Latentwärme anfallen und ausgenutzt werden.

Eine vorteilhafte Vorrichtung zur Durchführung des erfindungsgemäßen Verfahrens ist dadurch gekennzeichnet, daß in den Leitungskreis ein Energieabsorber zur Aufnahme von Umgebungswärme, insbesondere von Sonnen-, Luft- oder Regen-Wärme, einschaltbar ist, z. B. abgedeckte oder offene Kollektoren, Energiedächer, -fassaden, -zäune od. dgl. Der Energieabsorber kann über einen ein Wärmeträgermedium führenden, separaten Sekundärleitungskreis mit dem Wärmespeicher zu dessen Erwärmung verbunden sein. Dazu läßt sich das Wärmeträgermedium des separaten Sekundärleitungskreises gegebenenfalls über ein Umschaltventil od. dgl., z. B. einen Dreiwegeschieber, in den Leitungskreis einspeisen.

Sowohl der Leitungskreis als auch — falls — vorgesehen — der separate Sekundärleitungskreis können als Wärmeträgermedium Wasser führen, welches ein Frostschutzmittel enthält.

Nachfolgend wird die Erfindung anhand der Zeichnung noch genauer dargestellt. Dabei zeigen

Figur 1 ein Funktionsschema der erfindungsgemäßen Vorrichtung und

Figuren 2 und 3 den Temperaturverlauf in der Umgebung des Wärmespeichers am beginn und am Ende der Heizperiode.

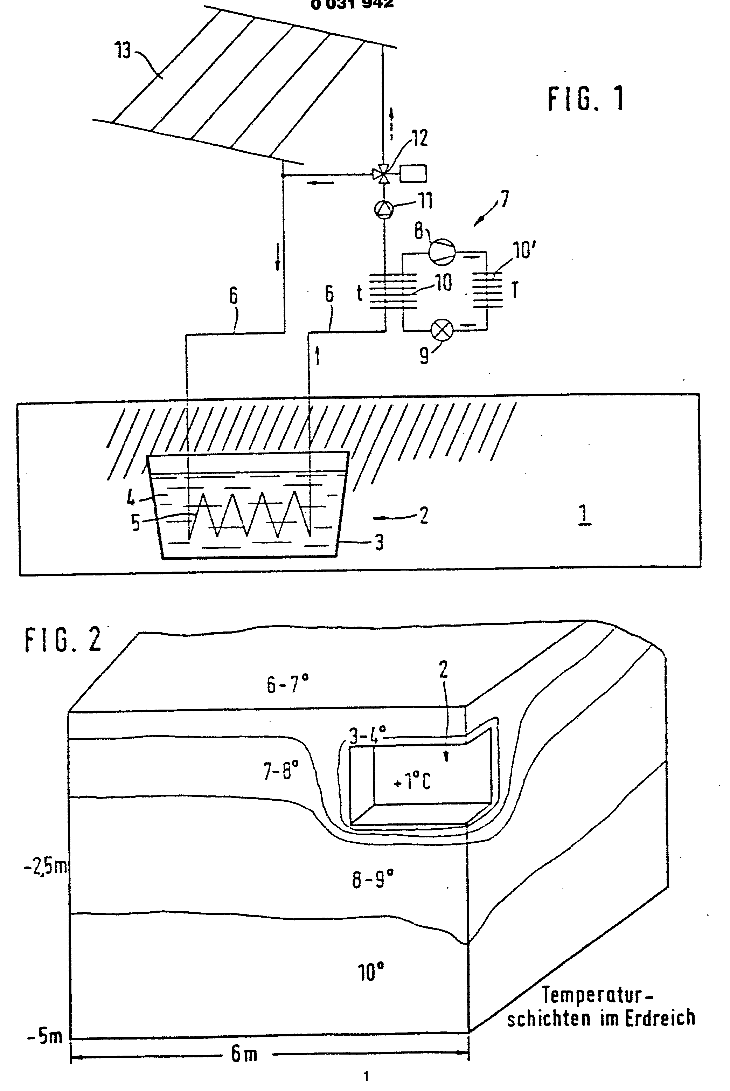

Figur 1 zeigt den im Boden 1 versenkten Wärmespeicher 2, der aus einem geschlossenen Behälter 3 mit einer Wasserfüllung 4 besteht. In diesem Behälter 3 ist ein Rohrregister 5 angeordnet, welches als Wärmetauscher dient und über einen Leitungskreis 6 mit einer Wärmepumpe 7 verbunden ist, die in bekannter Weise einen Pumpmedienkreislauf mit Kompressor 8 und Reduzierventil 9 aufweist, zwischen die als Verdampfer bzw. Kondensator für das Pumpmedium dienende Wärmetauscher 10, 10' geschaltet sind. In dem Leitungskreis 6 ist eine Umwälzpumpe 11 angeordnet, welche ein im Leitungskreis 6 und dem Rohrregister 5 befindliches Wärmeträgermedium vom Wärmespeicher 2 zur Wärmepumpe 7 und in den Speicher zurück umwälzt. Über ein motorbetätigtes Umschaltventil 12 kann in den Leitungskreis 6 gegebenenfalls ein Solarenergieabsorber bzw. Kollektor 13 eingeschaltet werden.

Diese Vorrichtung arbeitet wie folgt :

Zuerst wird die Betriebsweise ohne Absorber 13 betrachtet, d. h. das Umschaltventil 12 ist so geschaltet, daß das Wärmeträgermedium unter Umgehung des Absorbers 13 direkt zum Rohrregister 5 zurückgeführt wird. Das im Leitungskreis 6 umgewälzte Wärmeträgermedium fließt durch den Wärmetauscher 10 und erwärmt dabei das Wärmepumpenmedium auf eine Temperatur $t$, die etwas unterhalb der Temperatur der Wasserfüllung 4 liegt. Durch den Kompressor 8 wird das Wärmepumpenmedium stark erhitzt, so daß der Wärmetauscher 10' Wärme bei einer Temperatur $T$ abgibt, die um einen relativ konstanten Wert oberhalb der Temperatur $t$ liegt. Danach wird das Wärmepumpenmedium im Reduzierventil 9 wiederum entspannt, so daß es sich auf eine unter $t$ liegende Temperatur abkühlt und wieder Wärme im Wärmetauscher 10 aufnehmen kann. Das von der Wärmepumpe 7 in das Rohrregister 5 zurückfließende Wärmeträgermedium, dessen Temperatur unterhalb der der Behälterfüllung 4 liegt, erwärmt sich im Rohrregister 5 wiederum auf die Temperatur der Wasserfüllung 4 und kann dann in der eben beschriebenen Weise wiederum Wärme im Wärmetauscher 10 der Wärmepumpe 7 abführen.

Wird der Absorber 13 in den Leitungskreis 6 eingeschaltet, so fließt das Wärmeträgermedium vom Wärmetauscher 10 kommend in diesen Absorber 13 und wird gegebenenfalls von der Sonne stark erwärmt, so daß es mit einer Temperatur in das Rohrregister 5 gelangt, welche über der Temperatur der Wasserfüllung 4 liegt. Entsprechend diesem Temperaturunterschied gibt das Wärmeträgermedium im Rohrregister 5 Wärme an die Wasserfüllung 4 ab, wobei die Temperatur des Wärmeträgermediums auf die der Wasserfüllung 4 absinkt. Aufgrund der großen Wärmekapazität der Wasserfüllung 4 steigt deren Temperatur dabei nur sehr langsam, so daß die Temperatur des Wärmeträgermediums am Wärmetauscher 10 in gleicher Weise nur sehr langsam ansteigt und keinerlei kurzfristige Temperaturschwankungen zeigt. Die Wärmepumpe 7 entzieht dem Wärmespeicher 2 also die Wärme bei einer praktisch konstanten Entnahmetemperatur, da sich die Temperatur der Wasserfüllung 4 bei genügend großer Füllung auch bei großen, in den Wärmespeicher 2 eingebrachten bzw. aus ihm entnommenen Wärmemengen nur geringfügig ändert.

Diese Temperaturänderungen sind besonders gering, wenn die Temperatur der Wasserfüllung bei ca. 0 °C liegt, d. h. bei der Umwandlungstemperatur zwischen Wasser und Eis.

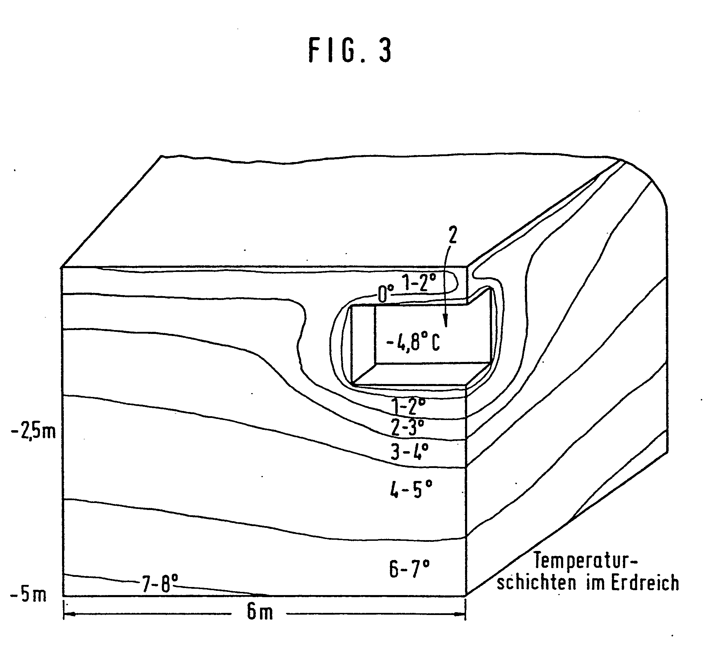

Die Fig. 2 zeigt den Temperaturverlauf innerhalb des Erdbodens in der Nähe des Wärmespeichers 2 vor Beginn der Heizperiode, während die Fig. 3 das entsprechende Bild nach der Heizperiode zeigt. Es ist gut erkennbar, daß die Temperaturschichtungen im Erdreich in beiden Fällen einen sehr ähnlichen Verlauf haben, nur liegt das Temperaturniveau am Ende der Heizperiode überall geringfügig tiefer. Jedoch findet in der warmen Jahreszeit bei Sonneneinstrahlung und insbesondere bei Regenfällen, wegen der hohen Wärmekapazität von Wasser, eine schnelle Wiedererwärmung statt.

Da die Temperatur des Wärmespeichers 2 unterhalb der Temperatur der angrenzenden Erdbereiche liegt, wird dem Boden laufend Wärme entnommen, die vom Wärmespeicher 2 aufgenommen wird.

Im dargestellten Beispiel besteht der Wärmespeicher 2 aus einem Behälter, dessen Fassungsvermögen für eine Füllmenge von 2 m³ Wasser ausgelegt ist. Mit einem solchen Wärmespeicher läßt sich die Wärme eines etwa 50 fachen Erdvolumes, d. h. von ca. 100 m³ des umgebenden Erdreiches, ausnutzen. Dadurch its es zum Beispiel möglich, den Wärmebedarf einer normalen Wohnung von ca. 120 m² über eine Wärmepumpe in der anhand der Fig. 1 beschriebenen Weise ganzjährig zu decken.

## Ansprüche

1. Verfahren zum Betrieb einer Heizvorrichtung zur Ausnutzung von Erdwärme mittels einer Wärmepumpe (7) mit einem im Erdreich (1) angeordneten und mit diesem in Wärmeaustausch stehenden Wärmespeicher (2) mit Wasserfüllung (4), der mittels der Wärmepumpe (7) Wärme unter gleichzeitigem Entzug von Wärme aus dem umgebenden Erdreich (1) über einen zwischen dem Wärmespeicher (2) und der Wärmepumpe (7) angeordneten, ein Wärmeträgermedium führenden Leitungskreis (6) entnehmbar ist, dadurch gekennzeichnet, daß die Wasserfüllung (4) eines als Wärmespeicher (2) unterhalb der Bodenfrostgrenze im Erdreich (1) versenkten, vorgefertigten, geschlossenen Behälters (3), zumindest teilweise aus Metall oder Kunststoff, während einer Heizperiode durch die Wärmepumpe (7) vollständig vereist wird, und daß der Zustand vollständiger Vereisung mittels eingeschalteter Wärmepumpe (7) unter weiterem Entzug von Wärme aus dem Erdreich (1) aufrechterhalten wird, so daß der Wärmeinhalt eines gegenüber dem Behälter (3) großen, an den Behälter (3) angrenzenden Bodenbereiches ausgenutzt wird.

2. Vorrichtung zur Durchführung des Verfahrens nach Anspruch 1, dadurch gekennzeichnet, daß in den Leitungskreis (6) ein Energieabsorber (13) zur Aufnahme von Umgebungswärme, insbesondere von Sonnen-, Luft- oder Regen-Wärme, einschaltbar ist, zum Beispiel abgedeckte oder offene Kollektoren, Energiedächer, -fassaden, -zäune od. dgl.

3. Vorrichtung nach Anspruch 2, dadurch gekennzeichnet, daß der Energieabsorber (13) zur Aufnahme von Umgebungswärme, insbesondere von Sonnen-, Luft- oder Regenwärme, über einen ein Wärmeträgermedium führenden separaten Sekundärleitungskreis mit dem Wärmespeicher (2) zu dessen Erwärmung verbindbar ist.

4. Vorrichtung nach Anspruch 3, dadurch gekennzeichnet, daß das Wärmeträgermedium des separaten Skundärleitungskreises über ein Umschaltventil (12) od. dgl., zum Beispiel einen Dreiwegeschieber, in den Leitungskreis (6) einspeisbar ist.

5. Vorrichtung nach einem der Ansprüche 2 bis 4, dadurch gekennzeichnet, daß der Leitungskreis (6) und — falls vorgesehen — auch der separate Sekundärleitungskreis als Wärmeträgermedium Wasser führen, welches ein Frostschutzmittel enthält.

## Claims

1. A method of operating a heating apparatus for exploiting geothermal heat by means of a heat pump (7), there being a heat storage device (2) with a water filling (4) arranged in the earth (1) in heat exchange relationship therewith, the heat being extractable from the water filling, with simultaneous extraction of heat from the surrounding earth (1), by means of the heat pump (7) via a conduit circuit (6) carrying a heat exchange medium and arranged between the heat storage device (2) and the heat pump (7), characterised in that the water filling (4) of a previously manufactured closed container (3) which is sunk in the earth (1) below the ground frost limit as the heat storage device (2), and which consists at least partly of metal or synthetic material, is completely frozen during a heating period by the heat pump (7) ; and in that the state of being completely frozen is maintained by means of the switched on heat pump (7) with the further extraction of heat from the earth (1), so that the heat content of a region of the earth which adjoins the container (3) and which is large relative to the container (3) is exploited.

2. Apparatus for carrying out the method of claim 1, characterised in that an energy absorber (13) for picking up environmental heat, in particular heat from the sun, heat from the air, or heat from the rain, for example covered or open collectors, energy collecting roofs, energy collecting facades, energy collecting fences or the like can be inserted into the conduit circuit (6).

3. Apparatus in accordance with claim 2, characterised in that the energy absorber (13) for picking up environmental heat, in particular heat from the sun, heat from the air and heat from the rain, can be connected with the heat storage device (2) to heat it up via a secondary conduit circuit carrying a heat exchange medium.

4. Apparatus in accordance with claim 3, characterised in that the heat exchange medium of the separate secondary conduit circuit can be fed into the conduit circuit (6) via a change-over valve (12) or the like, for example a three way cock.

5. An apparatus in accordance with one of the claims 2 to 4, characterised in that the conduit circuit (6) and, if provided, also the separate secondary conduit circuit carry as a heat exchange medium water which contains an antifreeze.

**Revendications**

1. Procédé d'exploitation d'un dispositif de chauffage pour l'utilisation de la chaleur terrestre au moyen d'une pompe à chaleur (7), comportant un accumulateur de chaleur (2) disposé dans le sol (1) et échangeant de la chaleur avec ce dernier, lequel accumulateur contient de l'eau de remplissage (4), à partir de laquelle de la chaleur peut être retirée au moyen de la pompe à chaleur (7) moyennant un prélèvement simultané de chaleur à partir du sol environnant (1) par l'intermédiaire d'un circuit de canalisations (6) disposé entre l'accumulateur de chaleur (2) et la pompe à chaleur (7) et véhiculant un fluide caloporteur, caractérisé en ce que l'eau de remplissage (4) d'un récipient fermé préfabriqué (3), enterré dans le sol (1) au-dessous de la limite de gelée du sol pour servir d'accumulateur de chaleur (2) et qui est constitué au moins partiellement par un métal ou une matière plastique, est congelée complètement par la pompe à chaleur (7) pendant une période de chauffage, et que l'état de congélation complète est maintenu au moyen de la pompe à chaleur (7) branchée, moyennant un soutirage ultérieur de chaleur à partir du sol (1) de sorte que l'on utilise la capacité calorifique d'une partie du sol jouxtant le récipient (3) et possédant une taille importante par rapport à ce dernier.

2. Dispositif pour la mise en œuvre du procédé selon la revendication 1, caractérisé en ce qu'un dispositif (13) absorbant de l'énergie, qui sert à absorber de la chaleur ambiante, notamment la chaleur du soleil, de l'air ou de la pluie, par exemple des collecteurs fermés ou ouverts, des toits, des façades ou des clôtures captant l'énergie ou analogues, peut être branché dans le circuit de canalisations (6).

3. Dispositif selon la revendication 2, caractérisé en ce que le dispositif absorbant de l'énergie (13), qui sert à absorber de la chaleur ambiante, notamment la chaleur du soleil, de l'air ou de la pluie, peut être relié par l'intermédiaire d'un circuit séparé de canalisations secondaires, véhiculant un fluide caloporteur, à l'accumulateur de chaleur (2), pour réaliser l'échauffement de ce dernier.

4. Dispositif selon la revendication 3, caractérisé en ce que le fluide caloporteur du circuit séparé de canalisations secondaires peut être branché par l'intermédiaire d'une vanne de distribution (12) ou analogue, par exemple un distributeur à trois voies, dans le circuit de canalisations (6).

5. Dispositif selon l'une des revendications 2 à 4, caractérisé en ce que le circuit de canalisations (6) et — dans le cas où cela est prévu — également le circuit séparé de canalisations secondaires véhiculent, comme fluide caloporteur, de l'eau qui contient un produit antigel.

**0 031 942**

FIG. 1

FIG. 2

6 - 7°

3 - 4°

2

7 - 8°

+1°C

-2,5m

8 - 9°

10°

Temperaturschichten im Erdreich

-5m

6m

# FIG. 3

Temperaturschichten im Erdreich